(19) Europäisches Patentamt
European Patent Office
Office européen des brevets

(11) **EP 4 576 531 A1**

(12) **DEMANDE DE BREVET EUROPEEN**

(43) Date de publication:
**25.06.2025 Bulletin 2025/26**

(21) Numéro de dépôt: **24221235.5**

(22) Date de dépôt: **18.12.2024**

(51) Classification Internationale des Brevets (IPC):
*H02M 1/00* (2006.01)    *H02M 3/155* (2006.01)
*H02M 3/335* (2006.01)    *H02M 3/00* (2006.01)
*H02M 11/00* (2006.01)

(52) Classification Coopérative des Brevets (CPC):
**H02M 3/01; H02M 3/33573; H02M 11/00**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **19.12.2023 FR 2314516**

(71) Demandeur: **Commissariat à l'Energie Atomique et aux Energies Alternatives
75015 Paris (FR)**

(72) Inventeurs:
• **DE ARAUJO PEREIRA, Lucas Henrique
38054 GRENOBLE CEDEX 9 (FR)**
• **DESPESSE, Ghislain
38054 GRENOBLE CEDEX 9 (FR)**
• **MOREL, Adrien
38054 GRENOBLE CEDEX 9 (FR)**
• **PILLONNET, Gaël
38054 GRENOBLE CEDEX 9 (FR)**

(74) Mandataire: **Lavoix
2, place d'Estienne d'Orves
75441 Paris Cedex 09 (FR)**

(54) **DISPOSITIF ÉLECTRONIQUE ET PROCÉDÉ DE PILOTAGE, AVEC COMMANDE VIA SIGNAL TRIANGULAIRE SYNCHRONISÉ, D'UN CONVERTISSEUR D'ÉNERGIE ÉLECTRIQUE COMPORTANT UN RÉSONATEUR, SYSTÈME DE CONVERSION D'ÉNERGIE ÉLECTRIQUE ASSOCIÉ**

(57)     L'invention concerne un dispositif de pilotage (20) d'un convertisseur (10) d'une tension d'entrée ($V_{in}$) en une tension de sortie ($V_{out}$), comportant un résonateur (12) ayant une fréquence d'oscillation et des cycles de résonance successifs, et plusieurs interrupteurs (14) connectés au résonateur.

Le dispositif de pilotage comprend :
- un module (40) de mesure d'une grandeur de régulation représentative du résonateur ;
- un module (44) de commande d'une commutation des interrupteurs, suivant plusieurs phases au cours d'un cycle de résonance, chaque phase résultant de la fermeture d'au moins un interrupteur et de l'ouverture des autres interrupteurs ;
- un module (42) de génération d'un signal triangulaire de référence, synchronisé régulièrement avec la grandeur de régulation, une grandeur caractéristique dudit signal triangulaire dépendant de la fréquence d'oscillation du résonateur (12) ;
le module de commande (44) commandant au moins l'un des interrupteurs à partir d'une comparaison avec le signal de référence.

FIG.1

EP 4 576 531 A1

**Description**

La présente invention concerne un dispositif électronique de pilotage d'un convertisseur d'énergie électrique apte à convertir une tension d'entrée en une tension de sortie.

L'invention concerne également un système de conversion d'énergie électrique comprenant un tel convertisseur et un tel dispositif électronique de pilotage du convertisseur.

L'invention concerne aussi un procédé de pilotage d'un tel convertisseur.

On connait un convertisseur comportant deux bornes d'entrée pour recevoir la tension d'entrée, deux bornes de sortie pour délivrer la tension de sortie, un résonateur, et plusieurs interrupteurs connectés au résonateur, le résonateur résonant suivant des cycles de résonance successifs, chaque cycle de résonance ayant une durée égale à une période de résonance, la période de résonance étant égale à l'inverse d'une fréquence d'oscillation du résonateur.

On connaît un dispositif électronique de pilotage comprenant un module de mesure configuré pour mesurer une grandeur de régulation, la grandeur de régulation étant une grandeur représentative du résonateur ; et un module de commande configuré pour commander, via une unité de pilotage, une commutation de chacun des interrupteurs, suivant plusieurs phases successives au cours d'un cycle de résonance du résonateur, chaque phase résultant de la fermeture d'au moins un interrupteur respectif et/ou de l'ouverture d'au moins un interrupteur.

La caractéristique la plus intéressante de ce type de convertisseur est sa forte densité de puissance lorsqu'il fonctionne à quelques MHz. Cela est dû à la propriété mécanique et piézoélectrique de l'élément de stockage transitoire d'énergie, qui permet de réduire sa taille de manière sensiblement linéaire avec l'augmentation de la fréquence de pilotage du convertisseur, tandis que l'inductance présente une réduction avec un taux inférieur, ainsi que cela est décrit dans l'article de P. A. Kyaw and C. R. Sullivan, "Fundamental examination of multiple potential passive component technologies for future power electronics" 2015 IEEE 16th Workshop on Control and Modeling for Power Electronics (COMPEL).

Des stratégies de contrôle, c'est-à-dire de pilotage, de convertisseurs continu-continu ou DC-DC (de l'anglais *Direct Current- Direct Current*) avec résonateur piézoélectrique à six phases au cours d'un cycle de résonance, avec alternance de phases à tension sensiblement constante aux bornes du résonateur et de phases à charge sensiblement constante aux bornes dudit résonateur, sont décrites dans les articles suivants :

- J. J. Piel, J. D. Boles, J. H. Lang and D. J. Perreault, "Feedback Control for a Piezoelectric-Resonator-Based DC-DC Power Converter" 2021 IEEE 22nd Workshop on Control and Modelling of Power Electronics (COMPEL) ;
- B. Pollet, G. Despesse and F. Costa, "A New Non-isolated Low-Power Inductorless Piezoelectric DC-DC Converter" in IEEE Transactions on Power Electronics, vol. 34, no. 11 ; et
- M. Touhami, G. Despesse, F. Costa and B. Pollet, "Implementation of Control Strategy for Step-down DC-DC Converter Based on Piezoelectric Resonator" 2020 22nd European Conférence on Power Electronics and Applications (EPE'20 ECCE Europe).

Cependant, ces stratégies utilisent un contrôle numérique effectué via un microcontrôleur, ou un composant logique programmable, tel qu'un FPGA (de l'anglais *Field Programmable Gate Array*), ou encore un bloc logique configurable, également appelé CLB (de l'anglais *Configurable Logic Bloc*), ce qui présente certaines limitations.

La fréquence de fonctionnement maximale des convertisseurs contrôlés est limitée par la fréquence et la précision d'échantillonnage du contrôleur utilisé (par exemple, les cartes FPGA les plus couramment utilisées, telles que Altera cyclone V, présentent une limitation de la fréquence maximale d'un signal analogique d'entrée d'environ 1 MHz, ce qui restreint la résolution temporelle d'échantillonnage du signal d'entrée à un maximum de 4 ns).

La commande directe d'unités de commande des interrupteurs, c'est-à-dire la mesure de la tension de référence et son action directe à travers un comparateur utilisé à 100 kHz, n'est pas possible à une fréquence de 10 MHz en raison des délais des unités de commande (qui sont plus longs que la durée typique d'une phase du cycle de résonance). Chaque unité de commande est apte à appliquer un signal de commande sur une électrode de commande, telle qu'une électrode de grille, de l'interrupteur associé, tel qu'un transistor.

La miniaturisation du convertisseur est limitée par la taille du contrôleur, qui peut être plus grande que celle du résonateur et de ses interrupteurs de puissance. Cependant, les microcontrôleurs ou les FPGA présentent l'avantage d'être plus flexibles, permettant des adaptations du contrôleur par le biais de la programmation. Contrairement au circuit intégré, les microcontrôleurs ou FPGA peuvent être reprogrammés pour apporter des modifications fonctionnelles après sa mise en route.

Le but de l'invention est alors de proposer un dispositif électronique de pilotage, et un procédé de pilotage associé, permettant un pilotage amélioré du convertisseur d'énergie électrique.

A cet effet, l'invention a pour objet un dispositif électronique de pilotage d'un convertisseur d'énergie électrique apte à convertir une tension d'entrée en une tension de sortie, le convertisseur comportant deux bornes d'entrée pour recevoir la tension d'entrée, deux bornes de sortie pour délivrer la tension de sortie, un résonateur, et plusieurs interrupteurs connectés au résonateur, le résonateur résonant suivant des cycles de résonance successifs, chaque cycle de résonance ayant une durée égale à une période de résonance, la période de résonance étant égale à l'inverse d'une fréquence d'oscillation du résonateur ;

le dispositif électronique de pilotage comprenant :

- un module de mesure configuré pour mesurer une grandeur de régulation, la grandeur de régulation étant une grandeur représentative du résonateur ;
- un module de commande configuré pour commander, via une unité de pilotage, une commutation de chacun des interrupteurs, suivant plusieurs phases successives au cours d'un cycle de résonance du résonateur, chaque phase résultant de la fermeture d'au moins un interrupteur respectif et de l'ouverture des autres interrupteurs ;
- un module de génération configuré pour générer un signal triangulaire de référence, synchronisé régulièrement avec la grandeur de régulation, une grandeur caractéristique du signal triangulaire de référence dépendant de la fréquence d'oscillation du résonateur ;

le module de commande étant configuré pour commander au moins l'un des interrupteurs à partir d'une comparaison avec le signal de référence.

Avec le dispositif électronique de pilotage selon l'invention, le signal triangulaire de référence permet de piloter avec précision les instants de commande périodiques des interrupteurs, et ce de manière synchronisée avec la grandeur de régulation qui est représentative du résonateur, la grandeur de régulation étant typiquement la tension aux bornes du résonateur.

En outre, la pente du signal triangulaire de référence dépend de la fréquence d'oscillation du résonateur, et est typiquement proportionnelle à cette fréquence d'oscillation, i.e. de vibration, du résonateur, ce qui permet alors d'avoir des commutations d'interrupteur synchronisées avec la résonance du résonateur.

Le signal triangulaire permet alors d'effectuer une conversion temps-grandeur où la grandeur, telle qu'une tension, est celle du signal de référence, afin d'associer à chaque instant périodique de commande une valeur correspondante de la grandeur sur le signal triangulaire.

Cette précision améliorée permet alors de minimiser les pertes de commutation et de maintenir les conditions de commutation douce, notamment à zéro de tension ou ZVS (de l'anglais *Zéro Voltage Switching*), ce qui permet au convertisseur de fonctionner de manière optimale à des fréquences élevées.

Suivant d'autres aspects avantageux de l'invention, le dispositif électronique de pilotage comprend une ou plusieurs des caractéristiques suivantes, prises isolément ou suivant toutes les combinaisons techniquement possibles :

- le module de génération est configuré pour synchroniser le signal de référence avec la grandeur de régulation au moins une fois par cycle de résonance ;
- la grandeur de régulation est une tension aux bornes du résonateur ;
  le signal de référence étant de préférence une tension triangulaire ;
- le signal triangulaire de référence est périodique et en forme d'une rampe à chaque période ;
  la rampe ayant une période, dite période de rampe, la période de rampe étant de préférence égale à la période de résonance, la période de rampe étant alors égale à l'inverse de la fréquence d'oscillation du résonateur ;
- un instant temporel de début de période du signal de référence est déterminé en fonction de la grandeur de régulation; l'instant temporel de début de période dépendant de préférence d'un instant temporel en lequel la dérivée temporelle de la grandeur de régulation est nulle ;
- l'instant temporel de début de période est anticipé par rapport à un instant temporel de commutation d'un interrupteur correspondant, un écart temporel entre l'instant temporel de début de période et l'instant temporel de commutation dépendant d'un délai de traitement par l'unité de pilotage, depuis l'émission d'une commande de commutation jusqu'à la commutation de l'interrupteur ;
- la grandeur caractéristique est choisie parmi le groupe consistant en : une pente du signal triangulaire de référence et une amplitude du signal triangulaire de référence ;
- lorsque la grandeur caractéristique est la pente du signal triangulaire de référence, la pente de la rampe est proportionnelle à la fréquence d'oscillation du résonateur ; la rampe présentant de préférence une amplitude fixe ; la pente de la rampe variant de préférence encore en fonction de la fréquence d'oscillation du résonateur lorsque l'amplitude de la rampe est fixe ;
  lorsque la grandeur caractéristique est l'amplitude du signal triangulaire de référence, l'amplitude est inversement proportionnelle à la fréquence d'oscillation du résonateur ; la rampe présentant de préférence une pente fixe ; l'amplitude de la rampe variant de préférence encore en fonction de la fréquence d'oscillation du résonateur lorsque la pente est fixe ;

- le module de commande est configuré pour commander plusieurs interrupteurs à la suite l'un de l'autre, correspondant à plusieurs phases du cycle de résonance, chaque commande étant effectuée à partir d'une comparaison respective avec le signal de référence ;
- le module de commande est configuré pour commander chaque interrupteur en un instant de commande respectif, obtenu par comparaison d'un signal de contrôle avec le signal de référence, et à chaque interrupteur est associé au moins un signal respectif de contrôle ;

   une butée minimale et une butée maximale étant prédéfinies pour chaque signal de contrôle, les butées minimale et maximale définissant des valeurs minimale et maximale de l'instant de commande ;
   le signal de contrôle et le signal de référence étant de préférence encore des tensions, et les butées minimale et maximale étant alors des tensions minimale et maximale ;

- les interrupteurs comportent :

   + un premier interrupteur connecté entre l'une des bornes d'entrée et le résonateur, le premier interrupteur étant commutable entre une position ouverte et une position fermée dans laquelle la tension d'entrée est appliquée aux bornes du résonateur;
   + un deuxième interrupteur connecté aux bornes du résonateur, le deuxième interrupteur étant commutable entre une position ouverte et une position fermée dans laquelle la tension est nulle aux bornes du résonateur; et
   + un troisième interrupteur connecté entre l'une des bornes de sortie et le résonateur, le troisième interrupteur étant commutable entre une position ouverte et une position fermée dans laquelle une énergie du résonateur est restituée à la tension de sortie.

- le résonateur est un résonateur piézoélectrique ;

   le résonateur piézoélectrique étant de préférence constitué selon l'une des constitutions parmi le groupe consistant en : un unique élément piézoélectrique ; plusieurs éléments piézoélectriques connectés en série ; plusieurs éléments piézoélectriques connectés en parallèle ; un élément piézoélectrique et un condensateur auxiliaire connectés en série ; un élément piézoélectrique et un condensateur auxiliaire connectés en parallèle ; et un agencement de plusieurs branches parallèles, chaque branche comportant un ou plusieurs éléments piézoélectriques connectés en série ou un condensateur auxiliaire ;
   le condensateur auxiliaire étant de préférence encore de capacité supérieure, de préférence encore au moins trois fois supérieure, à une capacité de référence du ou des éléments piézoélectriques, chaque élément piézoélectrique étant modélisé sous forme d'un condensateur et d'une branche résonante connectée en parallèle du condensateur, la capacité de référence étant la capacité dudit condensateur ;

- le module de commande est configuré pour commander la commutation de chacun des interrupteurs pour alterner des phases à tension sensiblement constante aux bornes du résonateur piézoélectrique et des phases à charge sensiblement constante aux bornes dudit résonateur piézoélectrique ; et
- le résonateur est un résonateur LC comportant une inductance et un condensateur connecté en série de l'inductance.

L'invention concerne également un système de conversion d'énergie électrique comprenant :

- un convertisseur d'énergie électrique apte à convertir une tension d'entrée en une tension de sortie, le convertisseur comportant deux bornes d'entrée pour recevoir la tension d'entrée, deux bornes de sortie pour délivrer la tension de sortie, un résonateur, et plusieurs interrupteurs connectés au résonateur, le résonateur résonant suivant des cycles de résonance successifs, chaque cycle de résonance ayant une durée égale à une période de résonance, la période de résonance étant égale à l'inverse d'une fréquence d'oscillation du résonateur ; et
- un dispositif électronique de pilotage du convertisseur d'énergie électrique ; le dispositif électronique de pilotage étant tel que défini ci-dessus.

L'invention concerne aussi un procédé de pilotage d'un convertisseur d'énergie électrique apte à convertir une tension d'entrée en une tension de sortie, le convertisseur comportant deux bornes d'entrée pour recevoir la tension d'entrée, deux bornes de sortie pour délivrer la tension de sortie, un résonateur, et plusieurs interrupteurs connectés au résonateur, le résonateur résonant suivant des cycles de résonance successifs, chaque cycle de résonance ayant une durée égale à une période de résonance, la période de résonance étant égale à l'inverse d'une fréquence d'oscillation du résonateur ;
le procédé étant mis en oeuvre par un dispositif électronique de pilotage et comprenant les étapes suivantes :

- mesure d'une grandeur de régulation, la grandeur de régulation étant une grandeur représentative du résonateur ;
- commande, via une unité de pilotage, d'une commutation de chacun des interrupteurs, suivant plusieurs phases successives au cours d'un cycle de résonance du résonateur, chaque phase résultant de la fermeture d'au moins un interrupteur respectif et de l'ouverture des autres interrupteurs,
- génération d'un signal triangulaire de référence, synchronisé régulièrement avec la grandeur de régulation, une grandeur caractéristique du signal triangulaire de référence dépendant de la fréquence d'oscillation du résonateur ;

la commande d'au moins l'un des interrupteurs étant effectuée à partir d'une comparaison avec le signal de référence.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un système électronique de conversion d'énergie électrique selon l'invention, comprenant un convertisseur d'énergie électrique comportant un résonateur et plusieurs interrupteurs connectés au résonateur ; et un dispositif électronique de pilotage du convertisseur d'énergie électrique ; le résonateur étant un résonateur piézoélectrique ;
- la figure 2 est une représentation schématique du convertisseur d'énergie électrique lorsque le résonateur est un résonateur LC ;
- la figure 3 est une représentation schématique du dispositif de pilotage de la figure 1 ;
- la figure 4 est une vue schématique d'un générateur de rampe ;
- la figure 5 est un organigramme d'un procédé, selon l'invention, de pilotage du convertisseur d'énergie électrique, le procédé étant mis en oeuvre par le dispositif électronique de pilotage de la figure 1 ;
- la figure 6 représente des courbes de la tension et de l'intensité aux bornes du résonateur piézoélectrique de la figure 1, en mode élévateur de tension, et respectivement en mode abaisseur de tension, du convertisseur d'énergie électrique ; et
- la figure 7 représente sur la gauche la courbe de la tension et de l'intensité aux bornes du résonateur piézoélectrique en mode abaisseur de tension de la figure 1, de manière analogue à la figure 6 ; et sur la droite la courbe d'un signal triangulaire de référence utilisé pour la commande des interrupteurs.

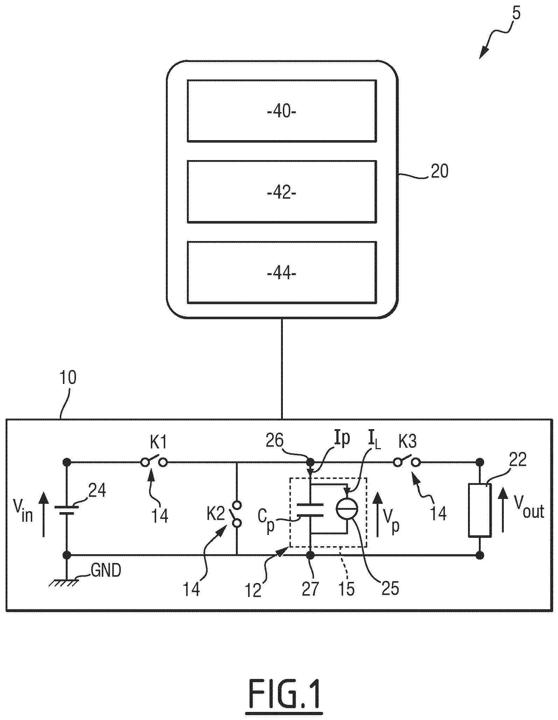

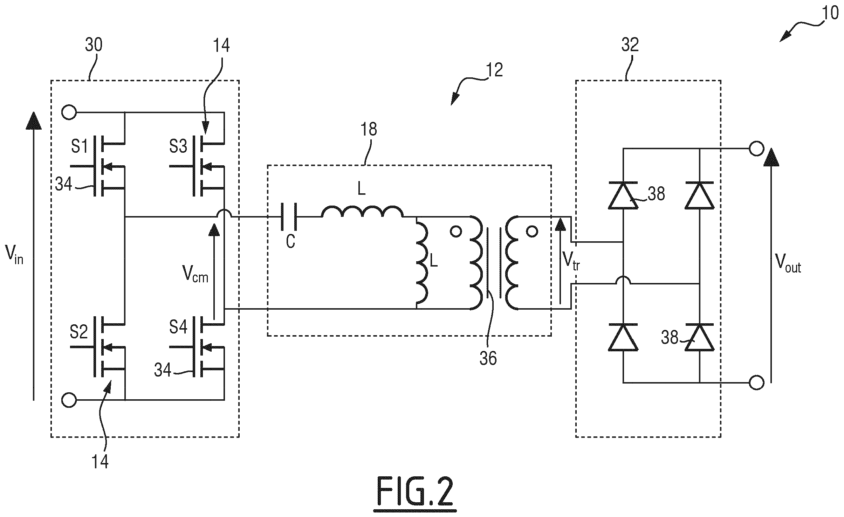

Sur la figure 1, un système électronique de conversion d'énergie électrique 5 comprend un convertisseur d'énergie électrique 10 comportant un résonateur 12 et plusieurs interrupteurs 14 connectés au résonateur 12. Dans l'exemple de la figure 1, le résonateur 12 est un résonateur piézoélectrique 15, les interrupteurs 14 sont notés K1, K2, K3. Dans l'exemple de la figure 2, le résonateur 12 est un résonateur LLC 18, les interrupteurs 14 sont notés S1, S2, S3, S4.

Le système de conversion 5 comprend également un dispositif électronique 20 de pilotage du convertisseur d'énergie électrique 10. L'énergie électrique est typiquement une tension, ou en variante un courant ou une puissance.

Le système électronique de conversion d'énergie électrique 5 est typiquement un système de conversion en une énergie électrique continue, tel qu'un système de conversion continu-continu apte à convertir une première énergie électrique continue reçue en entrée en une deuxième énergie électrique continue délivrée en sortie, ou encore un système de conversion alternatif-continu apte à convertir une énergie électrique alternative reçue en entrée en une énergie électrique continue délivrée en sortie du système de conversion 5.

Lorsque le système de conversion d'énergie électrique 5 est un système de conversion alternatif-continu, le système de conversion d'énergie électrique 5 comprend de préférence en outre un redresseur de tension, non représenté, connecté en entrée du convertisseur d'énergie électrique 10 et apte à redresser la tension électrique alternative reçue en entrée du système de conversion 5 pour délivrer une tension électrique redressée en entrée du convertisseur 10, le convertisseur d'énergie électrique 10 étant de préférence un convertisseur continu-continu apte à convertir une énergie électrique continue en une autre énergie électrique continue. Le redresseur de tension est par exemple un pont redresseur, tel qu'un pont de diodes. En variante, le redresseur de tension est formé en partie par des interrupteurs du convertisseur 10.

L'homme du métier observera que ces différents exemples pour le système conversion 5, qu'il s'agisse d'un système de conversion continu-continu ou bien d'un système de conversion alternatif-continu, sont également présentés dans les documents FR 3 086 471 A1 et FR 3 086 472 A1, notamment en regard de leurs figures 1 à 3, 10, 15, 17 et 19 à 20.

Le convertisseur d'énergie électrique 10 est de préférence un convertisseur continu-continu, et est également appelé convertisseur DC-DC. Le convertisseur continu-continu a généralement pour rôle de réguler une tension d'alimentation $V_{out}$ d'une charge 22 à une valeur stable, en étant alimenté par une source d'énergie 24 fournissant une tension sensiblement continue $V_{in}$. La source d'énergie 24 est par exemple une batterie ou un panneau solaire.

Le convertisseur d'énergie électrique 10 est alors configuré pour élever la valeur de la tension continue entre son entrée et sa sortie, et est alors également appelé convertisseur continu-continu élévateur, ou encore convertisseur continu-continu fortement élévateur ; ou bien est configuré pour abaisser la valeur de la tension continue entre son entrée et sa sortie, et est alors appelé convertisseur continu-continu abaisseur, avec également une variante de convertisseur continu-continu fortement abaisseur.

Lorsque le convertisseur d'énergie électrique 10 est un convertisseur continu-continu abaisseur, la valeur de la tension d'entrée correspond typiquement à la tension $V_{in}$ de la source d'énergie 24, et la valeur de la tension de sortie correspond à la tension $V_{out}$ aux bornes de la charge 22, la tension $V_{in}$ étant alors supérieure à la tension $V_{out}$.

Lorsque le convertisseur d'énergie électrique 10 est un convertisseur continu-continu élévateur, la valeur de la tension d'entrée correspond aussi typiquement à la tension $V_{in}$ de la source d'énergie 24, et la valeur de la tension de sortie correspond à la tension $V_{out}$ aux bornes de la charge 22, la tension $V_{in}$ étant alors inférieure à la tension $V_{out}$.

Lorsque le convertisseur d'énergie électrique 10 est un convertisseur continu-continu fortement abaisseur, la valeur de la tension d'entrée correspond par exemple à la différence de tension $(V_{in}-V_{out})$, et la valeur de la tension de sortie correspond par exemple à la tension $V_{out}$, la différence de tension $(V_{in}-V_{out})$ étant nettement supérieure à la tension $V_{out}$.

Lorsque le convertisseur d'énergie électrique 10 est un convertisseur continu-continu abaisseur, selon une variante d'abaisseur, la valeur de la tension d'entrée correspond par exemple à la différence de tension $(V_{in}-V_{out})$, et la valeur de la tension de sortie correspond à la tension $V_{out}$ aux bornes de la charge 22, la différence de tension $(V_{in}-V_{out})$ étant supérieure à la tension $V_{out}$.

Le convertisseur 10 comporte plusieurs interrupteurs 14 aptes à être commandés pour alterner des phases à tension sensiblement constante et des phases à charge sensiblement constante aux bornes du résonateur 12. Cette alternance de phases à tension sensiblement constante et de phases à charge sensiblement constante est typiquement effectuée à l'intérieur de périodes de durée sensiblement constante correspondant à la fréquence de fonctionnement du convertisseur 10, dépendant d'une fréquence d'oscillation, également appelée fréquence propre ou encore fréquence de vibration, du résonateur 12. Les phases à charge sensiblement constante permettent, en régime établi ou permanent, de passer d'une tension constante à une autre et de fermer les interrupteurs qui doivent l'être lorsque la tension à leurs bornes est de préférence nulle afin d'avoir une commutation dite à zéro de tension, également appelée commutation ZVS (de l'anglais *Zéro Voltage Switching).*

Chaque interrupteur 14 comprend par exemple un transistor et une diode antiparallèle (non représentés) intrinsèque au transistor.

Le transistor est, par exemple, un transistor à effet de champ à grille isolée, également appelé MOSFET (de l'anglais *Metal Oxide Semiconductor Field Effect Transistor*). En variante, le transistor est un transistor bipolaire ; un transistor bipolaire à grille isolée, également appelé IGBT (de l'anglais *Insulated Gate Bipolar Transistor*) ; un transistor à base de silicium (Si), un transistor à base de GaN (de l'anglais *Gallium Nitride*) ; un transistor à base de carbure de silicium (SiC), ou un transistor à base de diamant, ou encore un thyristor, ou encore un switch mécanique, tel qu'un micro-switch MEMS (de l'anglais *MicroElectroMechanical System).*

Par charge sensiblement constante, on entend un échange d'une charge avec l'extérieur qui est inférieur à 30 % de la charge qui aurait été échangée avec l'extérieur si la tension avait été maintenue constante. Autrement dit, par charge sensiblement constante, on entend une variation de charge inférieure à 30 % de la charge qui aurait été échangée avec l'extérieur du résonateur 12 si la tension aux bornes du résonateur 12 avait été maintenue constante sur la durée temporelle considérée.

Par circuit électrique sensiblement ouvert, on entend un circuit dont un éventuel courant de fuite conduit à une variation de charge du résonateur 12 inférieure à 30 % de la charge qui aurait été échangée avec l'extérieur du résonateur 12 si la tension aux bornes du résonateur 12 avait été maintenue constante sur la durée temporelle considérée.

Par tension sensiblement constante, on entend une variation de tension inférieure à 20%, de préférence inférieure à 10%, de la tension d'entrée ou de sortie du convertisseur 10. À titre d'exemple, si la tension d'entrée du convertisseur 10 est égale à 100V, alors la variation de tension lors de chaque phase à tension sensiblement constante, c'est-à-dire sur chaque palier à tension sensiblement constante, est inférieure à 20% de cette tension, c'est-à-dire inférieure à 20V ; de préférence inférieure à 10 % de cette tension, c'est-à-dire inférieure à 10V.

Dans l'exemple de la figure 1, le dispositif de pilotage 20 est configuré pour faire fonctionner le matériau piézoélectrique du résonateur piézoélectrique 15 à sa résonance afin d'exploiter des phases de transfert de charge permettant de s'affranchir de l'utilisation d'un élément inductif, tout en régulant la tension de sortie en conservant la résonance du matériau piézoélectrique, c'est-à-dire avec des cycles de commutation répétés à une fréquence de fonctionnement dépendant de la fréquence d'oscillation du résonateur piézoélectrique 15, et en ajustant les durées de phases de commutation respectives à l'intérieur du cycle de résonance.

Comme connu en soi, l'oscillation mécanique du résonateur piézoélectrique 15 est approximativement sinusoïdale. Une augmentation ou une diminution de l'énergie stockée sur une période conduit respectivement à une augmentation ou à une diminution de l'amplitude d'oscillation. Par ailleurs, lors d'une phase à charge sensiblement constante aux bornes du résonateur piézoélectrique 15, c'est-à-dire lorsque le résonateur piézoélectrique 15 est placé dans un circuit électrique sensiblement ouvert, avec un faible échange de charges électriques entre le résonateur piézoélectrique 15 et l'extérieur, une augmentation de l'amplitude des oscillations engendre une augmentation de la vitesse de variation de la tension $V_p$ aux bornes du résonateur piézoélectrique 15, et lors d'une phase à tension sensiblement constante aux bornes du résonateur piézoélectrique 15, cette augmentation d'amplitude d'oscillation conduit à une augmentation du courant échangé entre le résonateur piézoélectrique 15 et l'extérieur.

Dans l'exemple de la figure 1, un premier interrupteur K1 est connecté entre l'une des bornes d'entrée et le résonateur piézoélectrique 15, le premier interrupteur K1 étant commutable entre une position ouverte et une position fermée dans laquelle la tension d'entrée $V_{in}$ est appliquée aux bornes du résonateur piézoélectrique 15.

Un deuxième interrupteur K2 est connecté aux bornes du résonateur piézoélectrique 15, le deuxième interrupteur K2 étant commutable entre une position ouverte et une position fermée dans laquelle la tension est nulle aux bornes du résonateur piézoélectrique 15.

Un troisième interrupteur K3 est connecté entre l'une des bornes de sortie et le résonateur piézoélectrique 15, le troisième interrupteur K3 étant commutable entre une position ouverte et une position fermée dans laquelle une énergie du résonateur piézoélectrique 15 est restituée à la tension de sortie $V_{out}$.

La fréquence d'oscillation est la fréquence à laquelle oscille le résonateur 12, tel que le résonateur piézoélectrique 15 et par conséquent son courant $I_L$ sur sa branche motionnelle (branche R-L-C) de son modèle équivalent autour du mode de résonance sélectionné. Le courant $I_L$ peut être déduit soit en observant l'évolution de la tension $V_p$ lorsque le résonateur est isolé ou soit en observant son courant de sortie $I_p$ lors des phases à tension constante. Le cycle de conversion est synchronisé sur un mouvement mécanique du résonateur piézoélectrique 15, et la fréquence du pilotage est alors calée sur la fréquence d'oscillation mécanique. En pratique, cette fréquence d'oscillation dépend du point de fonctionnement du convertisseur 10 : valeurs des trois paliers de tension et du courant de sortie. En fonction du point de fonctionnement, cette fréquence d'oscillation évolue typiquement entre la fréquence de résonance dite série du piézoélectrique ($\omega s=1/\sqrt{(LC)}$ où L et C correspondent aux inductance et capacité d'une branche résonante 25 décrite ci-après) et la fréquence de résonance dite parallèle du piézoélectrique ($\omega p=1/\sqrt{(L*C*Cp/(C+Cp))}$), également respectivement appelés fréquence de résonance et fréquence d'antirésonance du résonateur piézoélectrique 15. La fréquence de fonctionnement du convertisseur 10 est alors comprise entre ces deux fréquences de résonance et d'antirésonance du résonateur piézoélectrique 15. Le point de fonctionnement varie lentement au regard de la fréquence d'oscillation du résonateur piézoélectrique 15. Le point de fonctionnement évolue typiquement à moins de 10kHz, alors que la fréquence d'oscillation du résonateur piézoélectrique 15 est typiquement supérieure ou égale à 100kHz. De ce fait, la fréquence de fonctionnement du convertisseur 10 évolue peu d'une période à la suivante.

En outre, plus le courant de sortie est faible, plus la fréquence d'oscillation se rapproche de la fréquence de résonance du piézoélectrique et plus la puissance de sortie est élevée, plus la fréquence d'oscillation se rapproche de la fréquence d'antirésonance du piézoélectrique.

De manière générale, le nombre total de phases à tension sensiblement constante au cours d'un cycle de résonance est supérieur ou égal à un dans un mode de fonctionnement nominal du convertisseur 10.

Dans l'exemple de la figure 1 où le résonateur 12 est le résonateur piézoélectrique 15, ce nombre total de phases à tension sensiblement constante est égal à trois en mode de fonctionnement nominal du convertisseur 10. De manière générale, lorsque le résonateur 12 est le résonateur piézoélectrique 15, le nombre total de phases à tension sensiblement constante au cours d'un cycle de résonance est typiquement supérieur ou égal à trois.

Dans l'exemple de la figure 2 où le résonateur 12 est le résonateur LLC 18, le nombre total de phases à tension sensiblement constante est égal à deux en mode de fonctionnement nominal du convertisseur 10. De manière générale, lorsque le résonateur 12 est le résonateur LLC 18, le nombre total de phases à tension sensiblement constante au cours d'un cycle de résonance est typiquement supérieur ou égal à deux. Les deux phases à tension sensiblement constante correspondent typiquement à $+V_{in}$ et $-V_{in}$ ; ou encore $+V_{in}/2$ et $-V_{in}/2$, où $V_{in}$ représente la tension d'entrée du convertisseur 10.

Lorsqu'on variante non représentée, le résonateur 12 est le résonateur LC de type VHF, il y a typiquement une seule phase à tension sensiblement constante en mode de fonctionnement nominal du convertisseur 10, et le convertisseur 10 comporte alors typiquement un seul interrupteur 14.

Le résonateur piézoélectrique 15 est connu en soi, et est typiquement modélisé, proche du mode de résonnance exploité, sous la forme d'un condensateur Cp et de la branche résonante 25 connectée en parallèle du condensateur Cp, le condensateur Cp et la branche résonante 25 étant connectés entre des première 26 et deuxième 27 électrodes du résonateur piézoélectrique 15. Les première 26 et deuxième 27 électrodes forment les bornes du résonateur piézoélectrique 15.

Dans l'exemple de la figure 1, le résonateur piézoélectrique 15 comporte un unique élément piézoélectrique.

En variante non représentée, le résonateur piézoélectrique 15 comporte plusieurs éléments piézoélectriques connectés en série. En variante, le résonateur piézoélectrique 15 comporte plusieurs éléments piézoélectriques connectés en parallèle. En variante, le résonateur piézoélectrique 15 comporte un élément piézoélectrique et un condensateur auxiliaire connectés en série. En variante, le résonateur piézoélectrique 15 comporte un élément piézoélectrique et un condensateur auxiliaire connectés en parallèle. En variante encore, le résonateur piézoélectrique 15 comporte un agencement de plusieurs branches parallèles, chaque branche comportant un ou plusieurs éléments piézoélectriques connectés en série ou un condensateur auxiliaire.

Selon les variantes concernées, le condensateur auxiliaire est avantageusement de capacité supérieure, de préférence encore au moins trois fois supérieure, à une capacité de référence du ou des éléments piézoélectriques, telle que la capacité du condensateur Cp dans l'exemple de la figure 1, chaque élément piézoélectrique étant modélisé sous forme d'un condensateur et d'une branche résonante connectée en parallèle du condensateur, la capacité de référence étant la capacité dudit condensateur.

Dans l'exemple de la figure 1, le premier interrupteur K1 est connecté entre une borne positive d'entrée et la première électrode 26 du résonateur 15, le deuxième interrupteur K2 est connecté entre les première 26 et deuxième 27 électrodes du résonateur piézoélectrique 15, et le troisième interrupteur K3 est connecté entre la première électrode 26 du résonateur 15 et une borne positive de sortie et le résonateur 15. Par borne positive, l'homme du métier comprendra qu'il s'agit de la borne de polarité positive, c'est-à-dire qui est au potentiel le plus élevé de la tension d'entrée $V_{in}$, respectivement de la tension de sortie $V_{out}$. Dans l'exemple de la figure 1, les bornes négatives d'entrée et de sortie sont connectées à une masse électrique GND.

La branche résonante 25 est typiquement une branche RLC formée d'un condensateur auxiliaire, d'une résistance et d'une inductance connectés en série (non représentés). La tension $V_p$ aux bornes du résonateur piézoélectrique 15 correspond alors typiquement à la tension aux bornes du condensateur Cp.

La capacité du condensateur auxiliaire est avantageusement supérieure à la capacité du condensateur Cp, notamment au moins trois fois supérieure.

Dans l'exemple de la figure 2, le résonateur 12 est le résonateur LLC 18, et le convertisseur 10 forme alors un convertisseur résonnant LLC. Les interrupteurs 14 sont notés S1, S2, S3, S4.

Le convertisseur résonant LLC comporte un circuit de commutation 30, un résonateur LLC 18 et un redresseur 32.

Le circuit de commutation 30 est, par exemple, en forme d'un pont complet, également appelé pont en H, comme visible sur la figure 2, ou d'un demi-pont (non-représenté). Le circuit de commutation 30 reçoit en entrée la tension $V_{in}$.

Le circuit de commutation 30, dans sa forme de pont en H, comprend par exemple quatre transistors 34 formant les interrupteurs 14, notés aussi S1, S2, S3, S4. Les transistors 34 sont par exemple des transistors MOSFET, tels que des transistors MOSFET à déplétion de type N.

Le résonateur LLC 18 est connecté en sortie du circuit de commutation 30, et est apte à recevoir en entrée un signal de tension $V_{cm}$. Le résonateur LLC 18 comprend deux inductances L et un condensateur C connectés selon un agencement connu pour former le résonateur LLC. Avantageusement, le résonateur LLC 18 comprend en outre un transformateur 36, connecté en sortie de l'agencement LLC et apte à délivrer une tension $V_{tr}$. L'homme du métier observera que l'inductance L parallèle à l'entrée du transformateur est tout ou partie formée par l'inductance magnétisante du transformateur et l'inductance L en série est formée par tout ou partie de l'inductance de fuite du transformateur. L'homme du métier observera également que les deux inductances L ne sont pas nécessairement identiques et de même valeur.

Le redresseur 32 est connecté en sortie du résonateur LLC 18, et alors apte à recevoir en entrée la tension $V_{tr}$. Le redresseur 32 est configuré pour redresser une tension alternative en la tension continue $V_{out}$ en sortie. Dans l'exemple de la figure 2, le redresseur 32 est en forme d'un pont de diodes 38, tel qu'un pont à quatre diodes 38.

Le dispositif de pilotage 20 est configuré pour piloter le convertisseur d'énergie électrique 10, et en particulier la commutation des interrupteurs 14 du convertisseur d'énergie.

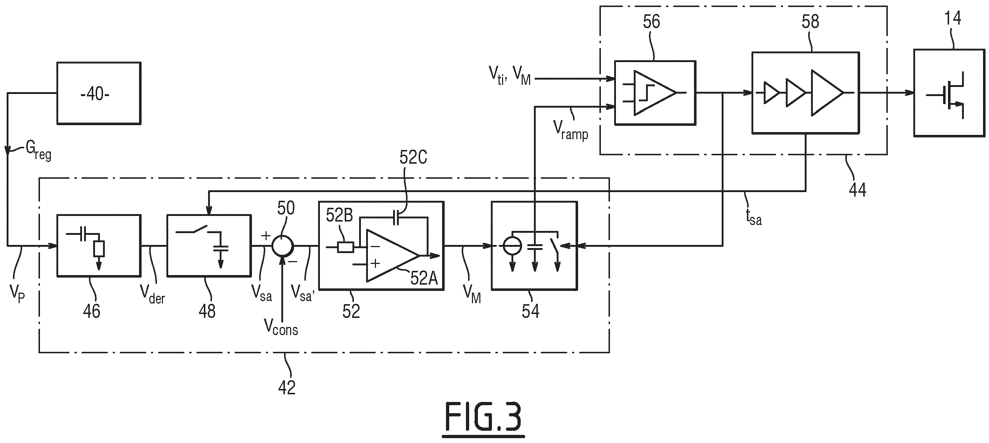

Dans l'exemple de la figure 3, le dispositif de pilotage 20 comprend un module de mesure 40, un module de génération 42 et un module de commande 44 pour un interrupteur 14 respectif.

Avantageusement, le dispositif de pilotage 20 comprend un module de mesure 40 et un module de commande 44 pour chacun des interrupteurs 14 respectifs, le module de génération 42 étant alors commun à tous les interrupteurs 14. Autrement dit, dans l'exemple de la figure 1 où le convertisseur d'énergie 10 comporte trois interrupteurs 14, le dispositif de pilotage 20 comprend alors avantageusement le module de génération 42 et trois ensembles de pilotage, à savoir un ensemble de pilotage pour chaque interrupteur 14 respectif, chaque ensemble de pilotage comportant un module de mesure 40 et un module de commande 44 respectifs. Pour le pilotage d'un interrupteur 14 respectif, l'ensemble de pilotage associé comporte avantageusement un seul module de mesure 40 et un seul module de commande 44 ; et pour le pilotage de cet interrupteur 14 respectif, le module de génération 42 est alors connecté à ces seuls modules de mesure 40 et de commande 44.

Plus généralement, le dispositif de pilotage 20 comprend plusieurs ensembles de pilotage, et le nombre d'ensembles de pilotage est égal au nombre des interrupteurs 14 dont la commutation est pilotée par le dispositif de pilotage 20. Le nombre de modules de mesure 40 et le nombre de module de commande 44 sont alors chacun égal au nombre d'interrupteurs 14 pilotés par le dispositif de pilotage 20. Le dispositif de pilotage 20 comprend préférentiellement un seul module de génération 42, connecté à chacun des ensembles de pilotage.

Le module de mesure 40, le module de génération 42, et le module de commande 44 sont par exemple réalisés chacun sous forme d'un circuit électronique comportant un ou plusieurs composants électroniques, et notamment des comparateurs lorsque des comparaisons sont effectuées.

En variante, le module de mesure 40, le module de génération 42, et le module de commande 44 sont chacun réalisés sous forme d'un composant logique programmable, tel qu'un FPGA (de l'anglais Field Programmable Gate Array), ou sous forme d'un circuit intégré, tel qu'un ASIC (de l'anglais Application Spécifie Integrated Circuit) ou encore sous forme d'un calculateur, tel qu'un microcontrôleur, un processeur. En variante encore, le module de mesure 40, le module de génération 42 et le module de commande 44 sont implémentés ensemble au sein d'un unique composant matériel, tel qu'un unique composant logique programmable, un unique circuit intégré, ou unique calculateur.

Le module de mesure 40 est configuré pour mesurer une grandeur de régulation $G_{reg}$. La grandeur de régulation $G_{reg}$ est par exemple la tension $V_p$ aux bornes du résonateur 12. En variante, la grandeur de régulation $G_{reg}$ est une autre grandeur représentative du résonateur 12, tel que le courant $I_p$.

La grandeur de régulation est mesurée de préférence juste avant la commutation de l'interrupteur 14. Par exemple, la grandeur de régulation est mesurée à moins de 20 ns, avantageusement à moins de 2 ns avant la commutation à la fermeture de l'interrupteur 14 respectif.

Le module de génération 42 est configuré pour générer un signal triangulaire de référence 45, en vue de son utilisation ultérieure pour la commande de l'interrupteur 14 respectif.

Avantageusement, le signal de référence 45 est une tension triangulaire $V_{ramp}$ périodique formant une rampe à chaque cycle de résonance du résonateur 12.

La rampe formée par la tension triangulaire $V_{ramp}$ présente une période de rampe $T_{ramp}$, la période de rampe $T_{ramp}$ étant de préférence égale à la période de résonance, la période de rampe $T_{ramp}$ étant alors égale à l'inverse de la fréquence d'oscillation du résonateur 12.

Un instant temporel de début de période du signal de référence est typiquement déterminé en fonction de la grandeur de régulation $G_{reg}$.

L'instant temporel de début de période du signal de référence dépend préférentiellement d'un instant temporel en lequel la dérivée temporelle de la grandeur de régulation $G_{reg}$ est nulle. Lorsque la grandeur de régulation $G_{reg}$ est la tension $V_p$ aux bornes du résonateur 12, l'instant temporel en lequel la dérivée temporelle de la grandeur de régulation $G_{reg}$ est nulle correspond alors au passage par zéro du courant $I_L$ circulant dans le résonateur 12, la dérivée temporelle de la tension $V_p$ étant une image dudit courant $I_L$.

Avantageusement, l'instant temporel de début de période est anticipé par rapport à un instant temporel de commutation $t_i$ d'un interrupteur correspondant, un écart temporel entre l'instant temporel de début de période et l'instant temporel de commutation $t_i$ dépendant d'un délai de traitement par une unité de pilotage 58 de l'interrupteur 14 respectif, décrite ci-après, c'est-à-dire le délai de traitement depuis l'émission d'une commande de commutation jusqu'à la commutation de l'interrupteur 14.

Selon cet aspect avantageux, la rampe est avancée du délai du pilotage de la commutation de l'interrupteur 14 respectif. En d'autres termes, la rampe est en avance sur la commutation de l'interrupteur 14 respectif. Cela donne de l'agilité à l'ensemble des régulations de compenser le délai de pilotage, c'est-à-dire le délai de mise en oeuvre de l'unité de pilotage 58, en supposant que les délais de pilotage sont sensiblement identiques d'un interrupteur 14 à l'autre.

Le signal triangulaire de référence 45 présente une grandeur caractéristique $G_{car}$ dépendant de la fréquence d'oscillation du résonateur 12, la grandeur caractéristique $G_{car}$ étant choisie parmi le groupe consistant en : une pente $\alpha$ du signal triangulaire de référence 45 et une amplitude $A_{mp}$ du signal triangulaire de référence 45.

Le module de commande 44 est configuré pour commander chaque interrupteur 14 en fonction du signal triangulaire de référence 45, en particulier à partir d'une comparaison avec le signal triangulaire de référence 45.

Dans l'exemple de la figure 3, le module de génération 42 comprend une unité de dérivation 46, une unité d'échantillonnage 48, une unité différentielle 50, un correcteur 52 et un générateur de rampe 54.

Le module de génération 42 est connecté en sortie du module de mesure 40, et apte à recevoir en entrée la grandeur de régulation $G_{reg}$, telle que la tension $V_p$ aux bornes du résonateur 12. En complément, le module de génération 42 est apte à recevoir une commande de remise à zéro et une valeur d'un instant d'échantillonnage $t_{sa}$ de l'interrupteur 14 respectif qui est contrôlé par le dispositif de pilotage 20.

L'unité de dérivation 46 est typiquement configurée pour calculer la dérivée d'un signal d'entrée, à savoir la grandeur de régulation $G_{reg}$, telle que la tension $V_p$ aux bornes du résonateur 12, et en calculant sa dérivée temporelle, pour délivrer une tension $V_{der}$ représentative de ladite dérivée temporelle.

La tension $V_{der}$ est typiquement une image du courant $I_L$ circulant dans le résonateur 12, en étant directement proportionnelle à la valeur du courant $I_L$ lorsque la grandeur de régulation $G_{reg}$ est la tension $V_p$ et que la tension $V_{der}$ correspond alors à $dV_p/dt$ et en considérant que le résonateur 12 est en circuit ouvert lors de l'échantillonnage.

L'unité d'échantillonnage 48 est connectée en sortie de l'unité de dérivation 46 et au module de commande 44, et est alors apte à recevoir en entrée la tension $V_{der}$ et l'instant d'échantillonnage $t_{sa}$, avantageusement à moins de 20ns, avantageusement sensiblement à 1 ns à 2 ns, avant la commutation effective de l'interrupteur 14 respectif.

L'unité d'échantillonnage 48 est typiquement configurée pour choisir une durée de l'échantillonnage, par exemple sensiblement égale à 1% de la durée totale d'un cycle.

Par exemple, l'instant d'échantillonnage $t_{sa}$ est ajustable via une temporisation programmable, par exemple intégrée sur le circuit électronique formant le module de génération 42, la référence de temps étant typiquement un front de signal montant ou descendant en amont ou à l'intérieur de l'unité de pilotage 58 de l'interrupteur 14 respectif.

L'unité d'échantillonnage 48 est apte à délivrer une tension $V_{sa}$ correspondant à la tension $V_{der}$ échantillonnée à l'instant d'échantillonnage $t_{sa}$.

L'unité différentielle 50 est connectée en sortie de l'unité d'échantillonnage 48, et est alors apte à recevoir en entrée la tension $V_{sa}$ et une tension de consigne $V_{cons}$.

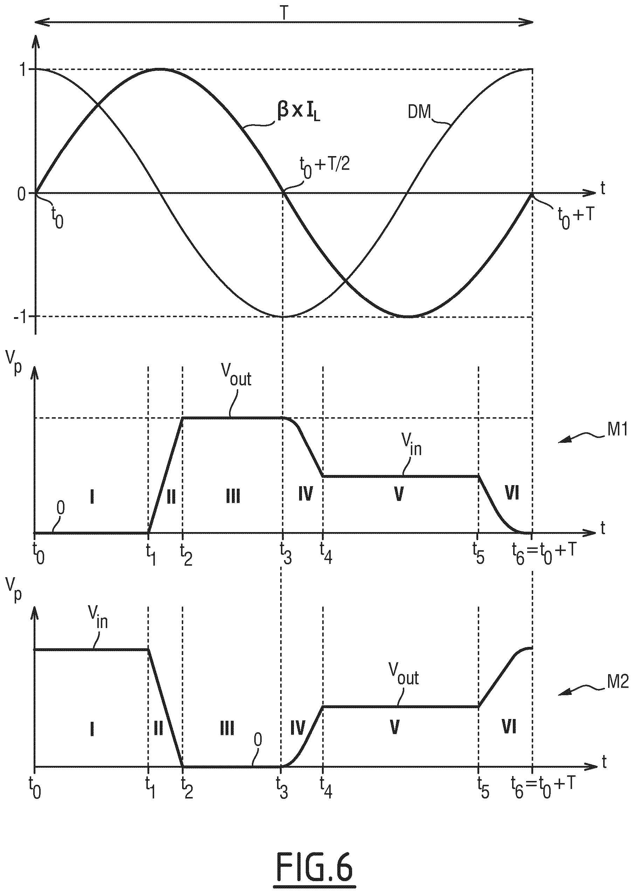

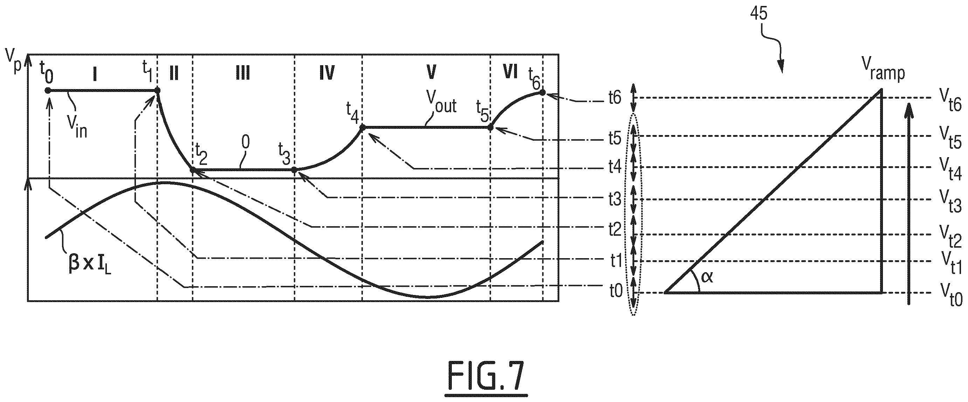

La tension de consigne $V_{cons}$ correspond avantageusement à la valeur voulue de consigne du courant à l'instant d'échantillonnage $t_{sa}$, telle que la valeur 0 pour l'instant $t_0$ dans l'exemple décrit ci-après en regard des figures 6 et 7.

L'unité différentielle 50 est destinée à délivrer une tension $V_{sa}'$ résultant de la différence entre les tensions $V_{sa}$ et $V_{cons}$.

L'unité différentielle 50 est par exemple en forme d'un soustracteur, apte à soustraire la tension de consigne $V_{cons}$ à la tension $V_{sa}$ pour délivrer la tension $V_{sa}'$ résultante.

Le correcteur 52 est connecté en sortie de l'unité différentielle 50, et est alors apte à recevoir en entrée la tension $V_{sa}'$.

Le correcteur 52 est typiquement configuré pour effectuer une régulation de l'instant périodique de commande de commutation de l'interrupteur 14 respectif, en recevant en entrée la tension $V_{sa}'$ issue de l'unité d'échantillonnage 48, en calculant une erreur $\varepsilon$ entre cette tension $V_{sa}'$ et une tension cible, et en effectuant ensuite une intégration de cette erreur $\varepsilon$. Le correcteur 52 est alors apte à délivrer une tension $V_M$.

Le correcteur 52 comprend par exemple un amplificateur opérationnel 52A, une résistance 52B et une boucle de rétroaction avec un condensateur 52C. La boucle de rétroaction relie la sortie de l'amplificateur opérationnel 52A à son entrée négative. La résistance électrique 52B est connectée entre l'entrée du correcteur 52 recevant la tension $V_{sa}'$ et l'entrée négative de l'amplificateur opérationnel 52A. Bien sûr, tout autre type de correcteur peut être utilisé, par exemple proportionnel-intégrale ou encore proportionnel-intégrale-dérivée.

Le générateur de rampe 54 est connecté en sortie du correcteur 52, et est configuré pour générer la tension triangulaire $V_{ramp}$ formant une rampe pour la commande de l'interrupteur 14 respectif, à savoir une référence de commande pour l'ensemble des instants de commutation des interrupteurs 14, la grandeur caractéristique $G_{car}$, telle que la pente $\alpha$ de la rampe, étant adaptée en fonction de la valeur de la tension $V_M$ de sortie du correcteur 52.

Le générateur de rampe 54 est par exemple destiné à régler la valeur de la pente $\alpha$ de la tension triangulaire $V_{ramp}$ afin de réguler tous les instants de commutations ; et à remettre à zéro la rampe de la tenson triangulaire $V_{ramp}$.

Dans cet exemple, la pente $\alpha$ est donc modifiée en fonction de la fréquence d'oscillation du résonateur 12, tout en gardant l'amplitude Amp de la tension triangulaire $V_{ramp}$ constante.

En variante, le générateur de rampe 54 est destiné à régler la valeur de l'amplitude Amp de la tension triangulaire $V_{ramp}$ afin de réguler tous les instants de commutations. Selon cette variante, l'amplitude Amp est donc modifiée en fonction de la fréquence d'oscillation du résonateur 12, tout en gardant la pente $\alpha$ de la tension triangulaire $V_{ramp}$ constante.

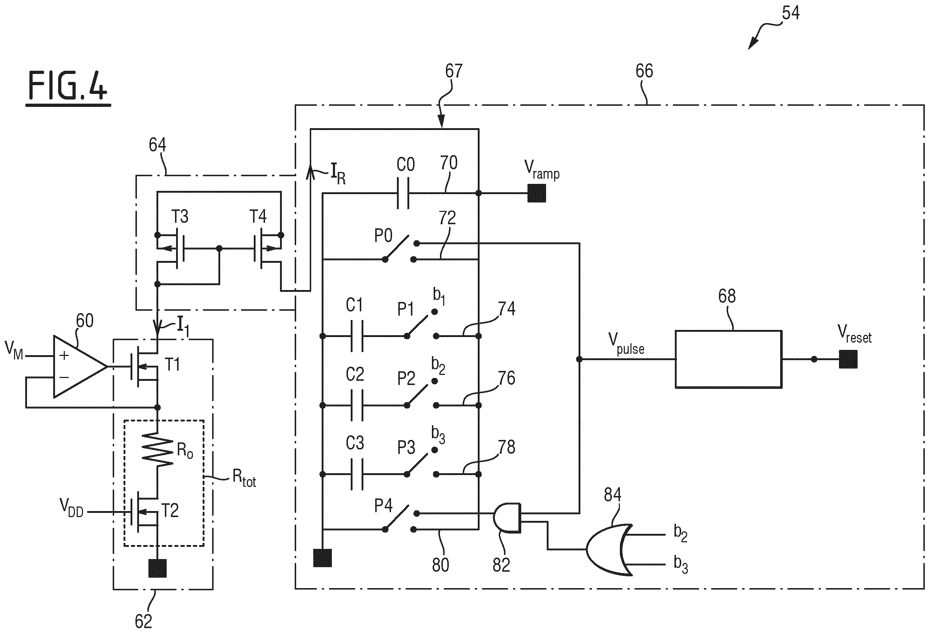

Un exemple de réalisation du générateur de rampe 54 est décrit ci-après en regard de la figure 4.

Dans l'exemple de la figure 3, le module de commande 44 comprend un comparateur 56 et l'unité de pilotage 58.

Le module de commande 44 est connecté en sortie du module de génération 42, et alors apte à recevoir en entrée la tension $V_{ramp}$.

Le comparateur 56 est connecté en sortie du générateur de rampe 54, et est alors apte à recevoir la tension $V_{ramp}$.

Avantageusement, il existe autant de modules de commande 44 que d'interrupteurs 14, c'est-à-dire que la moitié d'instants de commutation souhaités au cours du cycle de résonance, chaque interrupteur 14 étant commuté une fois en fermeture et une fois en ouverture au cours du cycle de résonance. On note chacun de ces instants de commutations $t_i$, i étant compris entre 0 et 6 dans l'exemple décrit.

Chaque instant de commutation $t_i$ est associé à un signal respectif de contrôle. Dans l'exemple décrit, chaque instant de commutation $t_i$ est associé à une tension de contrôle respective $V_{ti}$.

Dans l'exemple décrit, à chaque interrupteur 14 sont associés deux instants de commutations $t_i$, et alors à chaque interrupteur 14 sont associés deux signaux respectifs de contrôle.

Chaque tension de contrôle $V_{ti}$ est avantageusement comprise entre une butée minimale $V_{ti\_min}$ et une butée maximale $V_{ti\_max}$, les butées minimales $V_{ti\_min}$ et maximale $V_{ti\_max}$ étant prédéfinies par l'utilisateur et définissant des valeurs minimales $t_{i\_min}$ et maximales $t_{i\_max}$ des instants de commande $t_i$.

Les butées minimales $V_{ti\_min}$ et maximale $V_{ti\_max}$ visent à éviter des décalages de commutation trop importants.

Préférentiellement, on observe que la butée maximale $V_{ti\_max}$ d'un instant courant de commutation $t_i$ est toujours inférieure à la butée minimale $V_{ti+1\_min}$ d'un instant suivant de commutation $t_{i+1}$, de sorte que l'instant courant $t_i$ précède quoiqu'il l'instant suivant $t_{i+1}$.

Dans l'exemple décrit, le comparateur 56 est destiné à plusieurs usages selon que la durée du cycle de résonance et un instant de commutation initial $t_0$ ou bien selon que les instants suivants de commutation $t_1$ à $t_5$ sont pilotés. L'homme du métier comprendra alors que l'usager associé au comparateur 56 dépend du module de commande 44 auquel appartient ledit comparateur 56, alors de l'interrupteur 14 respectif auquel il est associé.

Premièrement, pour le pilotage de la durée du cycle de résonance et de l'instant de commutation initial ta, le comparateur 56 est destiné à délivrer une tension en créneau avec un niveau logique haut si la tension $V_{ramp}$ est supérieure à une tension prédéfinie $V_M$ et avec un niveau logique bas si la tension $V_{ramp}$ est inférieure à la tension $V_M$. La tension $V_M$ est également appelée tension de fin de rampe.

Deuxièmement, pour le pilotage des instants suivants de commutation $t_1$ à $t_5$, le comparateur 56 est destiné, pour chaque instant de commutation $t_i$ correspondant à son interrupteur 14 respectif, à délivrer une tension en créneau avec :

- un niveau logique haut respectif si la tension $V_{ramp}$ est supérieure à :

    + la tension de contrôle $V_{ti}$ lorsque la tension $V_{ti}$ est comprise entre la butée minimale $V_{ti\_min}$ et la butée maximale $V_{ti\_max}$ ;
    + la butée minimale $V_{ti\_min}$ lorsque la tension de contrôle $V_{ti}$ est inférieure à la butée minimale $V_{ti\_min}$ ; ou
    + la butée maximale $V_{ti\_max}$ lorsque la tension de contrôle $V_{ti}$ est supérieure à la butée maximale $V_{ti\_max}$ ; et

- un niveau logique bas sinon.

En variante, le correcteur 52 intègre directement un limiteur de tension $V_{ti\_min}$, $V_{ti\_max}$, par exemple, dans le cas d'un correcteur intégrateur, en arrêtant d'intégrer en dehors de ces limites en tension.

L'unité de pilotage 58 est connectée en sortie du comparateur 56, et est alors apte à recevoir en entrée la tension en créneau, caractérisant un signal de commande en ouverture ou en fermeture, selon l'instant de commutation correspondant.

L'unité de pilotage 58 comporte par exemple un circuit logique, ou une bascule de type RS (de l'anglais *Reset Set*), ou encore une bascule de type D, chacun configuré pour générer l'ordre de commande de l'interrupteur considéré à partir des signaux de commande en ouverture ou en fermeture, le front montant du signal de commande en fermeture, noté CompOn, indiquant l'instant de fermeture de l'interrupteur considéré et le front montant du signal de commande en ouverture, noté CompOff, indiquant l'instant d'ouverture de l'interrupteur considéré.

L'unité de pilotage 58 comporte alors par exemple une bascule RS, avec l'entrée S connectée à CompOn et l'entrée R connectée à CompOff, la sortie Q délivrant le signal de commande de l'interrupteur considéré ; ou une bascule D avec Reset, avec l'entrée D à l'état mise à l'état haut, l'entrée Clock connectée à CompOn et l'entrée R connectée à CompOff, la sortie Q délivrant le signal de commande de l'interrupteur considéré ; ou encore un circuit logique effectuant l'opération (CompOn et Not(CompOff)), le résultat formant le signal de commande de l'interrupteur considéré.

L'unité de pilotage 58 est connectée en entrée de l'interrupteur 14 respectif, et est configurée pour appliquer le signal de commande en ouverture, ou respectivement en fermeture, à une électrode de commande de l'interrupteur 14, telle qu'une électrode de grille lorsque l'interrupteur 14 comporte un transistor tel qu'un MOSFET ou un IGBT.

Comme visible sur la figure 4, le générateur de rampe 54 comprend un amplificateur opérationnel 60, un suiveur de source 62, un miroir de courant 64 et une unité de génération 66.

L'amplificateur opérationnel 60 est connecté, par son entrée positive, en sortie du correcteur 52, et est alors apte à recevoir la tension $V_M$.

L'entrée négative de l'amplificateur opérationnel est quant à elle reliée en sortie du suiveur de source 62.

Le suiveur de source 62 comprend un transistor T1, un transistor T2 et une résistance $R_0$, le transistor T2 et la résistance $R_0$ étant reliés en série et formant une résistance équivalente $R_{tot}$. L'électrode de commande du transistor T1 est reliée en sortie de l'amplificateur opérationnel 60.

Une première électrode de conduction du transistor T1 est reliée à la borne négative de l'amplificateur opérationnel 60 et à la résistance équivalente $R_{tot}$, une deuxième électrode de conduction du transistor T1 délivrant un courant $I_1$.

L'amplificateur opérationnel 60 est donc destiné à compenser la tension de seuil du transistor T1, afin de réduire la variation du courant $I_1$.

Par configuration électrique, le courant $I_1$ vérifie typiquement l'équation suivante :

[1]

$$I_1 = \frac{V_M}{R_{tot}}$$

où $I_1$ représente le courant en sortie du transistor T1 et en entrée du miroir de courant 64,

$V_M$ représente la tension en sortie du correcteur 52,

$R_{tot}$ représente la résistance équivalente formée par la mise en série du transistor T2 avec la résistance $R_0$.

La commande du transistor T2 est par exemple connectée à un potentiel haut, telle qu'une une tension d'alimentation $V_{DD}$, pour maintenir le transistor T2 fermé.

Le miroir de courant 64 comprend deux transistors T3 et T4, les transistors T3 et T4 étant par exemple des transistors de type PMOS.

Le miroir de courant 64 est connecté en sortie du suiveur de source 62, par sa connexion avec la deuxième électrode de conduction du transistor T1 et reçoit donc le courant $I_1$.

Le miroir de courant 64 est destiné à délivrer en sortie un courant sensiblement identique au courant $I_1$, typiquement à 5% près, quelle que soit la charge appliquée en sortie du miroir de courant 64.

Le courant I1 est appliqué aux électrodes de commandes des transistors T3 et T4 et à une première électrode de conduction de T3, des secondes électrodes de conduction des transistors T3 et T4 étant reliées électriquement entre elles ; et un courant $I_R$ répliqué étant obtenu en une première électrode de conduction de T4.

L'unité de génération 66 comprend un circuit en dérivation 67 ainsi qu'un module de pulsation 68.

L'unité de génération 66 est connectée en sortie du miroir de courant 64, et est alors apte à recevoir en entrée le courant $I_R$.

Le circuit en dérivation 67 est destiné à délivrer la tension $V_{ramp}$.

Le circuit en dérivation 67 comporte 6 branches électriques 70, 72 ,74 ,76, 78 et 80 en dérivation, la tension $V_{ramp}$ étant aux bornes de chacune des branches électriques 70, 72, 74, 76, 78 et 80. Bien entendu, il est possible d'utiliser tout autre nombre de branche(s) incluant *a minima* la branche 80, plus le nombre de branches est élevé, plus le régalage de la fréquence peut être fin et/ou sur une plage de fréquence large.

La première branche 70 comprend un condensateur C0.

La valeur du condensateur C0 est typiquement comprise entre 0,1 et 10 pF, notamment sensiblement égale à 0,7 pF.

La deuxième branche 72 comprend un interrupteur P0, l'interrupteur P0 étant destiné à être piloté par le module de pulsation 68.

La troisième branche 74 comprend un condensateur C1 et un interrupteur P1, le condensateur C1 et l'interrupteur P1 étant reliés en série.

La valeur du condensateur C1 est typiquement comprise entre 0,04 et 10 pF, notamment sensiblement égale à 0,4 pF.

L'interrupteur P1 est destiné à être commandé par un bit de commande $b_1$ prédéfini par l'utilisateur, l'interrupteur P1 étant en position ouverte lorsque le bit $b_1$ vaut 0 et en position fermée lorsque le bit $b_1$ vaut 1.

La quatrième branche 76 comprend un condensateur C2 et un interrupteur P2, le condensateur C2 et l'interrupteur P2 étant reliés en série.

La valeur du condensateur C2 est typiquement comprise entre 0,4 et 50 pF, notamment sensiblement égale à 4 pF.

L'interrupteur P2 est destiné à être commandé par un bit de commande $b_2$ prédéfini par l'utilisateur, l'interrupteur P2 étant en position ouverte lorsque le bit $b_2$ vaut 0 et en position fermée lorsque le bit $b_2$ vaut 1.

La cinquième branche 78 comprend un condensateur C3 et un interrupteur P3, le condensateur C3 et l'interrupteur P3 étant reliés en série.

La valeur du condensateur C3 est typiquement comprise entre 1 et 150 pF, notamment sensiblement égale à 12 pF.

L'interrupteur P3 est destiné à être commandé par un bit de commande $b_3$ prédéfini par l'utilisateur, l'interrupteur P3 étant en position ouverte lorsque le bit $b_3$ vaut 0 et en position fermée lorsque le bit $b_3$ vaut 1.

La sixième branche 80 comprend un interrupteur P4, l'interrupteur P4 étant destiné à être piloté par le module de pulsation 68.

Les différentes configurations possibles du circuit en dérivation 67, de par sa pluralité de condensateurs et d'interrupteurs, permettent alors de régler grossièrement la valeur de la pente $\alpha$ de la tension triangulaire $V_{ramp}$. Ce réglage de la pente $\alpha$ permet alors de définir la périodicité des instants de commutation de tous les interrupteurs 14.

A titre d'exemple, cette configuration capacitive sert à prérégler une fréquence centrale. La régulation via la tension $V_M$, aussi appelée tension de fin de rampe, permet alors d'ajuster la fréquence autour de cette fréquence centrale. Il s'agit d'un préréglage soit en avance, soit au démarrage du convertisseur 10 pour se placer sur une bande de fréquence cohérente avec le résonateur piézoélectrique 15 sur le mode de résonance choisi.

Pour le réglage, il est par exemple possible de procéder comme suit :

- identifier la plage de fréquence utile du résonateur piézoélectrique 15 ;
- déterminer la fréquence centrale de cette plage ;

- identifier la valeur centrale de la tension $V_M$ ;
- calculer la valeur de $C_{ramp}$ selon l'équation suivante :

[2]

$$C_{ramp} = \frac{V_M}{f_{ramp}.\Delta V_{ramp}.R_{tot}}$$

où $C_{ramp}$ désigne une valeur totale de la capacité des branches 70, 72, 74, 76, 78 et 80,

$V_M$ représente la tension en sortie du correcteur 52, en particulier la valeur centrale précitée,

$f_{ramp}$ désigne la fréquence du signal triangulaire de référence 45, en particulier la fréquence centrale précitée,

$\Delta V_{ramp} = V_{ramp\_max} - V_{ramp\_min}$, où $V_{ramp\_max}$ désigne la valeur maximale de la rampe de tension $V_{ramp}$, et $V_{ramp\_min}$ désigne la valeur minimale de ladite rampe, les valeurs $V_{ramp\_max}$ et $V_{ramp\_min}$ étant prédéfinies et contrôlées par l'utilisateur, et

$R_{tot}$ représente la résistance équivalente formée par la mise en série du transistor T2 avec la résistance $R_0$ ;

- appliquer la configuration de P1, P2 et P3 qui permet d'obtenir la valeur capacitive la plus proche de la valeur $C_{ramp}$ souhaitée.

Le module de pulsation 68 est connecté en sortie du comparateur 56 associé à la régulation de la durée du cycle de résonance, c'est-à-dire la régulation de la période de résonance, et est alors apte à recevoir en entrée une tension $V_{reset}$.

La tension $V_{reset}$ est une tension créneau, présentant un niveau logique haut si la tension $V_{ramp}$ dépasse la tension de fin de rampe $V_M$, et un niveau logique bas sinon.

Le module de pulsation 68 est destiné à décharger les condensateurs C0, C1, C2 et C3 lorsque la tension $V_{reset}$ présente un niveau logique haut, indiquant que la rampe a permis la commutation de tous les instants de commutations et qu'il faut donc la réinitialiser.

Le module de pulsation 68 est destiné à piloter les interrupteurs P0 et/ou P4 dans leur position fermée, et ce afin de décharger les condensateurs C0, C1, C2 et C3 ; lorsque la tension seuil $V_M$ permettant la commande du dernier instant de commutation est souhaitée.

Le module de pulsation 68 est apte à délivrer une tension $V_{pulse}$ dont la largeur temporelle est prédéfinie et permet de choisir une durée de décharge D des condensateurs C0, C1, C2 et C3.

La durée de décharge D des condensateurs est typiquement inférieure à 10ns, par exemple choisie entre 2 ns, 5ns et 10 ns.

L'interrupteur P0 est directement commandé par la tension $V_{pulse}$.

L'interrupteur P4 est commandé par l'intermédiaire d'une porte logique ET 82.

La porte logique ET 82 est connectée en sortie du module de pulsation 68 et d'une porte logique OU 84, et alors apte à recevoir en entrée la tension $V_{pulse}$ et une tension $V_{OR}$.

La porte logique ET 82 est apte à délivrer en sortie une tension $V_{AND}$, la tension $V_{AND}$ étant typiquement aussi en forme d'une tension en créneau avec un niveau logique haut si les tensions $V_{pulse}$ et $V_{OR}$ présentent un niveau logique haut, et avec un niveau logique bas sinon. L'interrupteur P4 est commandé en position fermée si $V_{AND}$ présente un niveau logique haut, ou est commandé en position ouverte si $V_{AND}$ présente un niveau logique bas.

La porte logique OU 84 est apte à recevoir en entrée le bit $b_2$ et le bit $b_3$, préalablement définis par l'utilisateur.

La porte logique OU 84 est apte à délivrer en sortie la tension $V_{OR}$, la tension $V_{OR}$ étant typiquement en forme d'une tension en créneau avec un niveau logique haut si $b_2$ et/ou $b_3$ présente(nt) une valeur égale à 1, et avec un niveau logique bas sinon.

Par exemple, l'interrupteur P4 est disposé au plus près des condensateurs C2 et C3, car les condensateurs C2 et C3 ont des capacités typiquement plus grandes que les condensateurs C0 et C1 et nécessitent plus de temps pour être déchargé. L'interrupteur P4 est donc seulement commandé quand le condensateur C3 ou C4 ou les deux sont utilisés pour la génération du signal de rampe.

La fréquence $f_{ramp}$ vérifie typiquement l'équation suivante :

[3]

$$f_{ramp} = \frac{V_M}{C_{ramp}.\Delta V_{ramp}.R_{tot}}$$

**13**

où les paramètres sont identiques à ceux de l'équation [2] précédente.

La capacité $C_{ramp}$ vérifie typiquement l'équation suivante :

[4]

$$C_{ramp} = C0 + b_1.C1 + b_2.C2 + b_3.C3$$

où $C_{ramp}$ désigne la valeur totale de la capacité des branches 70, 72, 74, 76, 78 et 80, éventuellement complétée de capacités parasites, par exemple les capacité parasites des interrupteurs P0 à P4,

C0, C1, C2 et C3 désignent respectivement les capacités des condensateurs C0, C1, C2 et C3,
$b_1$, $b_2$ et $b_3$ désignent respectivement les valeurs des bits de contrôle des interrupteurs P1, P2 et P3 (0 pour un condensateur désactivé et 1 pour un condensateur activé).

Dans l'exemple décrit, $V_{ramp\_min} = 0$, ce qui entraine que $\Delta V_{ramp} = V_{ramp\_max}$, et également $V_{ramp\_max} = V_M$, soit ici $\Delta V_{ramp} = V_{ramp\_max} = V_M$.

Le fonctionnement nominal d'un cycle du convertisseur 10 comprenant un résonateur piézoélectrique 15 va maintenant être décrit en regard de la figure 6 montrant les phases successives d'un cycle de résonance du résonateur piézoélectrique, selon un format générique correspondant à différents modes de fonctionnement du convertisseur 10, à savoir un premier mode de fonctionnement M1, également appelé mode élévateur de tension ; et un deuxième mode de fonctionnement M2, également appelé mode abaisseur de tension.

La figure 6 représente alors l'évolution du courant $\beta*I_L$ du courant $I_L$ normalisé en amplitude circulant dans le résonateur piézoélectrique 15 visible sur la figure 1 ; de la tension $V_p$ aux bornes du résonateur piézoélectrique 15 ; et de la déformation mécanique du résonateur piézoélectrique 15, représentée par la courbe DM ; ceci au cours d'un cycle de résonance et pour deux modes de fonctionnement du convertisseur 10, à savoir le premier mode de fonctionnement M1 en élévateur de tension, et le deuxième mode de fonctionnement M2 en abaisseur de tension. Avec $\beta=-1$ en mode de fonctionnement élévateur de tension M1 ; et $\beta=+1$ en mode de fonctionnement abaisseur de tension M2.

Par convention, on définit un premier instant temporel de commutation, noté $t_0$.

A l'instant temporel to, commence une première phase I à tension sensiblement constante, à la valeur nulle selon le premier mode M1 via la fermeture du deuxième interrupteur K2, ou à la tension d'entrée $V_{in}$ selon le deuxième mode M2 via la fermeture du premier interrupteur K1, et dure jusqu'à un instant temporel $t_1$ qui forme un paramètre de réglage du convertisseur 10, cet instant temporel $t_1$ permettant de définir la tension, le courant ou encore la puissance souhaitée en sortie du convertisseur 10.

L'instant temporel $t_1$ correspond alors à la fin de la première phase I et à l'instant auquel le deuxième interrupteur K2 selon le premier mode M1, ou respectivement le premier interrupteur K1 selon le deuxième mode M2, doit alors être ouvert, l'instant temporel $t_1$ formant un deuxième instant temporel de commutation correspondant à l'ouverture du deuxième interrupteur K2 selon le premier mode M1, ou respectivement du premier interrupteur K1 selon le deuxième mode M2.

Au deuxième instant temporel $t_1$ de commutation débute une deuxième phase II correspondant à une phase à charge sensiblement constante, ou encore en circuit sensiblement ouvert, cette deuxième phase II durant jusqu'à un instant temporel $t_2$ défini par le passage à une nouvelle valeur prédéfinie de la tension $V_p$ aux bornes du résonateur piézoélectrique 15. Lorsque le convertisseur 10 comporte trois interrupteurs K1, K2, K3 aptes à être commandés pour alterner des phases à tension sensiblement constante et des phases à charge sensiblement constante aux bornes du résonateur piézoélectrique 15, l'instant temporel $t_2$ formant la fin de la deuxième phase II correspond typiquement à la fermeture du troisième interrupteur K3 selon le premier mode M1, ou respectivement du deuxième interrupteur K2 selon le deuxième mode M2, l'instant temporel $t_2$ formant alors un troisième instant temporel de commutation.

A l'instant temporel $t_2$ débute alors une troisième phase III correspondant à une phase à tension sensiblement constante à la tension de sortie $V_{out}$ selon le premier mode M1 via la fermeture du troisième interrupteur K3, ou à la valeur nulle selon le deuxième mode M2 via la fermeture du deuxième interrupteur K2. Cette troisième phase III dure jusqu'à un instant temporel $t_3$.

A partir du passage par zéro du courant $I_L$ circulant dans le résonateur piézoélectrique 15 débute alors une quatrième phase IV correspondant à une phase à charge sensiblement constante, cette quatrième phase s'écoulant entre l'instant temporel $t_3$ et l'instant temporel $t_4$. La fin de cette quatrième phase VI correspond au moment où la tension $V_p$ aux bornes du résonateur piézoélectrique 15 atteint la tension d'entrée $V_{in}$ selon le premier mode M1, ou à la tension de sortie $V_{out}$ selon le deuxième mode M2.

Un cinquième instant temporel de commutation, noté $t_4$, correspond à la fermeture du premier interrupteur K1 pour le premier mode M1, respectivement du troisième interrupteur K3 pour le deuxième mode M2, et la tension $V_p$ aux bornes du résonateur piézoélectrique 15 est alors sensiblement constante et égale à la tension d'entrée $V_{in}$ selon le

premier mode M1, ou à la tension de sortie $V_{out}$ selon le deuxième mode M2. En ce cinquième instant temporel de commutation $t_4$ commence alors une cinquième phase V durant jusqu'à l'ouverture de l'interrupteur qui a été fermé en le cinquième instant temporel de commutation $t_4$.

Un sixième instant temporel de commutation, noté $t_5$, correspond à l'ouverture du premier interrupteur K1 pour le premier mode M1, respectivement du troisième interrupteur K3 pour le deuxième mode M2, et la tension $V_p$ aux bornes du résonateur piézoélectrique 15 passe alors d'une tension précédente $V_{in}$ selon le premier mode M1, ou $V_{out}$ selon le deuxième mode M2, à une position de circuit ouvert. En ce sixième instant temporel de commutation $t_5$ commence alors une sixième phase VI durant jusqu'à un instant temporel $t_6$ correspondant à un passage à zéro du courant $I_L$ circulant dans le résonateur piézoélectrique 15. Préalablement, l'instant temporel $t_5$ a été défini de sorte qu'en l'instant temporel $t_6$, la tension $V_p$ aux bornes du résonateur piézoélectrique 15 atteigne une valeur correspondant à la valeur permettant une commutation à zéro de tension de l'interrupteur correspondant.

Par convention, l'instant temporel $t_6$ est égal à la somme de l'instant temporel $t_0$ et de la période T du cycle de résonance, et est également noté $(t_0+T)$.

Dans l'exemple de la figure 6, l'instant temporel $t_6$ correspond à la fin d'un cycle de résonance du résonateur piézoélectrique 15.

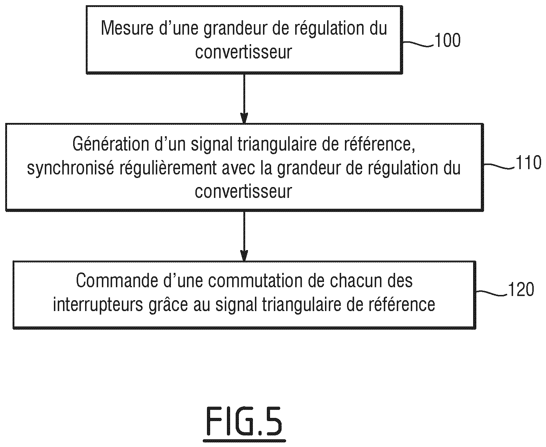

Le procédé de pilotage d'un convertisseur d'énergie électrique 10 via le dispositif de pilotage 20 va maintenant être décrit en regard de l'organigramme de la figure 5, le procédé comprenant trois étapes distinctes.

Lors d'une première étape 100, le module de mesure 40 mesure la grandeur de régulation $G_{reg}$ du convertisseur 10. La grandeur de régulation $G_{reg}$ est avantageusement la tension $V_p$ aux bornes du résonateur 12.

Lors d'une deuxième étape 110, le module de génération 42 génère le signal triangulaire de référence 45, puis le synchronise avec la grandeur de régulation $G_{reg}$ mesurée par le module de mesure 40, la grandeur de régulation $G_{reg}$ dépendant de la fréquence d'oscillation du résonateur 12.

Avantageusement, le module de génération 42 synchronise le signal triangulaire de référence 45 avec la grandeur de régulation $G_{reg}$ au moins une fois par cycle de résonance, notamment une fois par cycle de résonance.

Lors d'une troisième étape 120, le module de commande 44 reçoit le signal triangulaire de référence 45 de la part du module de génération 42, en particulier via le générateur de rampe 54, et commande une commutation de chacun des interrupteurs 14, selon plusieurs phases successives au cours d'un cycle de résonance du résonateur 12, chaque phase résultant d'une commutation d'au moins un interrupteur respectif.

Les instants de commutations des différents interrupteurs 14 sont déterminés par comparaison avec le signal triangulaire de référence 45.

Dans l'exemple décrit, chaque instant de commutation $t_0$, $t_1$, $t_2$, $t_3$, $t_4$, $t_5$ ou $t_6$ est relié à un signal respectif de contrôle, ici une tension de contrôle respective $V_{t0}$, $V_{t1}$, $V_{t2}$, $V_{t3}$, $V_{t4}$, $V_{t5}$ ou $V_{t6}$. L'interrupteur associé à chaque instant $t_0$, $t_1$, $t_2$, $t_3$, $t_4$, $t_5$ ou $t_6$ est alors commuté lorsque la tension $V_{ramp}$ correspondant au signal de référence atteint la tension de contrôle respective $V_{t0}$, $V_{t1}$, $V_{t2}$, $V_{t3}$, $V_{t4}$, $V_{t5}$, $V_{t6}$, ou bien la butée minimale respective $V_{t0\_min}$, $V_{t1\_min}$, $V_{t2\_min}$, $V_{t3\_min}$, $V_{t4\_min}$, $V_{t5\_min}$, $V_{t6\_min}$ lorsque la tension de contrôle $V_{ti}$ respective est inférieure à ladite butée minimale $V_{ti\_min}$ respective ; ou encore la butée maximale respective $V_{t0\_max}$, $V_{ti\_max}$, $V_{t2\_max}$, $V_{t3\_max}$, $V_{t4\_max}$, $V_{t5\_max}$, $V_{t6\_max}$ lorsque la tension de contrôle $V_{ti}$ respective est supérieure à ladite butée maximale $V_{ti\_max}$ respective ; comme visible schématiquement sur la figure 7.

On conçoit ainsi que le dispositif électronique de pilotage 20 et le procédé de pilotage selon l'invention permettent un pilotage précis des instants de commande des interrupteurs 14, et ce de manière synchronisée avec la grandeur de régulation $G_{reg}$ qui est représentative du résonateur 12.

La grande précision des instants de commutations, obtenue grâce à l'invention, permet alors de minimiser les pertes de commutation et de maintenir les conditions de commutation douce, notamment à zéro de tension ou ZVS (de l'anglais *Zéro Voltage Switching*), ce qui permet au convertisseur 10 de fonctionner de manière optimale à des fréquences élevées.

**Revendications**

1. Dispositif électronique de pilotage (20) d'un convertisseur d'énergie électrique (10) apte à convertir une tension d'entrée ($V_{in}$) en une tension de sortie ($V_{out}$), le convertisseur (10) comportant deux bornes d'entrée pour recevoir la tension d'entrée ($V_{in}$), deux bornes de sortie pour délivrer la tension de sortie ($V_{out}$), un résonateur (12), et plusieurs interrupteurs (14) connectés au résonateur (12), le résonateur (12) résonant suivant des cycles de résonance successifs, chaque cycle de résonance ayant une durée égale à une période de résonance, la période de résonance étant égale à l'inverse d'une fréquence d'oscillation du résonateur (12) ;

le dispositif électronique de pilotage (20) comprenant :

- un module de mesure (40) configuré pour mesurer une grandeur de régulation ($G_{reg}$), la grandeur de régulation étant une grandeur représentative du résonateur (12) ;
- un module de commande (44) configuré pour commander, via une unité de pilotage (58), une commutation de chacun des interrupteurs (14), suivant plusieurs phases successives au cours d'un cycle de résonance du résonateur (12), chaque phase résultant de la fermeture d'au moins un interrupteur (14) respectif et de l'ouverture des autres interrupteurs (14) ;

**caractérisé en ce qu'**il comprend en outre :

- un module de génération (42) configuré pour générer un signal triangulaire de référence (45), synchronisé régulièrement avec la grandeur de régulation ($G_{reg}$), une grandeur caractéristique ($G_{car}$) du signal triangulaire de référence (45) dépendant de la fréquence d'oscillation du résonateur (12) ;

le module de commande (44) étant configuré pour commander au moins l'un des interrupteurs (14) à partir d'une comparaison avec le signal de référence.

2. Dispositif selon la revendication 1, dans lequel le module de génération (42) est configuré pour synchroniser le signal de référence avec la grandeur de régulation ($G_{reg}$) au moins une fois par cycle de résonance.

3. Dispositif selon la revendication 1 ou 2, dans lequel la grandeur de régulation ($G_{reg}$) est une tension aux bornes du résonateur (12) ;
le signal de référence étant de préférence une tension triangulaire ($V_{ramp}$).

4. Dispositif selon l'une quelconque des revendications précédentes, dans lequel le signal triangulaire de référence (45) est périodique et en forme d'une rampe à chaque période ;
la rampe ayant une période, dite période de rampe ($T_{ramp}$), la période de rampe ($T_{ramp}$) étant de préférence égale à la période de résonance, la période de rampe ($T_{ramp}$) étant alors égale à l'inverse de la fréquence d'oscillation du résonateur.

5. Dispositif selon la revendication 4, dans lequel un instant temporel de début de période du signal de référence est déterminé en fonction de la grandeur de régulation ($G_{reg}$);
l'instant temporel de début de période dépendant de préférence d'un instant temporel en lequel la dérivée temporelle de la grandeur de régulation ($G_{reg}$) est nulle.

6. Dispositif selon la revendication 5, dans lequel l'instant temporel de début de période est anticipé par rapport à un instant temporel de commutation ($t_i$) d'un interrupteur correspondant, un écart temporel entre l'instant temporel de début de période et l'instant temporel de commutation ($t_i$) dépendant d'un délai de traitement par l'unité de pilotage (58), depuis l'émission d'une commande de commutation jusqu'à la commutation de l'interrupteur (14).

7. Dispositif selon l'une quelconque des revendications précédentes, dans lequel la grandeur caractéristique ($G_{car}$) est choisie parmi le groupe consistant en : une pente ($\alpha$) du signal triangulaire de référence (45) et une amplitude (Amp) du signal triangulaire de référence (45).

8. Dispositif selon l'une quelconque des revendications 4 à 6, prise avec la revendication 7, dans lequel lorsque la grandeur caractéristique ($G_{car}$) est la pente ($\alpha$) du signal triangulaire de référence (45), la pente ($\alpha$) de la rampe est proportionnelle à la fréquence d'oscillation du résonateur ; la rampe présentant de préférence une amplitude (Amp) fixe ; la pente ($\alpha$) de la rampe variant de préférence encore en fonction de la fréquence d'oscillation du résonateur (12) lorsque l'amplitude (Amp) de la rampe est fixe ;
dans lequel lorsque la grandeur caractéristique ($G_{car}$) est l'amplitude (Amp) du signal triangulaire de référence (45), l'amplitude (Amp) est inversement proportionnelle à la fréquence d'oscillation du résonateur (12) ; la rampe présentant de préférence une pente ($\alpha$) fixe ; l'amplitude (Amp) de la rampe variant de préférence encore en fonction de la fréquence d'oscillation du résonateur (12) lorsque la pente ($\alpha$) est fixe.

9. Dispositif selon l'une quelconque des revendications précédentes, dans lequel le module de commande (44) est configuré pour commander plusieurs interrupteurs (14) à la suite l'un de l'autre, correspondant à plusieurs phases du cycle de résonance, chaque commande étant effectuée à partir d'une comparaison respective avec le signal de référence.

10. Dispositif selon l'une quelconque des revendications précédentes, dans lequel le module de commande (44) est configuré pour commander chaque interrupteur (14) en un instant de commande respectif, obtenu par comparaison d'un signal de contrôle avec le signal de référence, et à chaque interrupteur est associé au moins un signal respectif de contrôle ;

une butée minimale et une butée maximale étant prédéfinies pour chaque signal de contrôle, les butées minimale et maximale définissant des valeurs minimale et maximale de l'instant de commande ;
le signal de contrôle et le signal de référence étant de préférence encore des tensions ($V_{ti}$), et les butées minimale et maximale étant alors des tensions minimale ($V_{ti\_min}$) et maximale ($V_{ti\_max}$).

11. Dispositif selon l'une quelconque des revendications précédentes, dans lequel les interrupteurs (14) comportent :

- un premier interrupteur (K1) connecté entre l'une des bornes d'entrée et le résonateur (12), le premier interrupteur (K1) étant commutable entre une position ouverte et une position fermée dans laquelle la tension d'entrée ($V_{in}$) est appliquée aux bornes du résonateur (12);
- un deuxième interrupteur (K2) connecté aux bornes du résonateur (12), le deuxième interrupteur (K2) étant commutable entre une position ouverte et une position fermée dans laquelle la tension est nulle aux bornes du résonateur (12); et
- un troisième interrupteur (K3) connecté entre l'une des bornes de sortie et le résonateur (12), le troisième interrupteur (K3) étant commutable entre une position ouverte et une position fermée dans laquelle une énergie du résonateur (12) est restituée à la tension de sortie ($V_{out}$).

12. Dispositif selon l'une quelconque des revendications 1 à 11, dans lequel le résonateur (12) est un résonateur piézoélectrique (15) ;

le résonateur piézoélectrique (15) étant de préférence constitué selon l'une des constitutions parmi le groupe consistant en : un unique élément piézoélectrique ; plusieurs éléments piézoélectriques connectés en série ; plusieurs éléments piézoélectriques connectés en parallèle ; un élément piézoélectrique et un condensateur auxiliaire connectés en série ; un élément piézoélectrique et un condensateur auxiliaire connectés en parallèle ; et un agencement de plusieurs branches parallèles, chaque branche comportant un ou plusieurs éléments piézoélectriques connectés en série ou un condensateur auxiliaire ;
le condensateur auxiliaire étant de préférence encore de capacité supérieure, de préférence encore au moins trois fois supérieure, à une capacité de référence du ou des éléments piézoélectriques, chaque élément piézoélectrique étant modélisé sous forme d'un condensateur et d'une branche résonante connectée en parallèle du condensateur, la capacité de référence étant la capacité dudit condensateur.

13. Dispositif selon la revendication précédente, dans lequel le module de commande (44) est configuré pour commander la commutation de chacun des interrupteurs (14) pour alterner des phases à tension sensiblement constante aux bornes du résonateur piézoélectrique (15) et des phases à charge sensiblement constante aux bornes dudit résonateur piézoélectrique (15).

14. Dispositif selon l'une quelconque des revendications 1 à 11, dans lequel le résonateur (12) est un résonateur LC comportant une inductance et un condensateur connecté en série de l'inductance.

15. Système de conversion d'énergie électrique (5) comprenant :

- un convertisseur d'énergie électrique (10) apte à convertir une tension d'entrée ($V_{in}$) en une tension de sortie ($V_{out}$), le convertisseur (10) comportant deux bornes d'entrée pour recevoir la tension d'entrée ($V_{in}$), deux bornes de sortie pour délivrer la tension de sortie ($V_{out}$), un résonateur (12), et plusieurs interrupteurs (14) connectés au résonateur (12), le résonateur (12) résonant suivant des cycles de résonance successifs, chaque cycle de résonance ayant une durée égale à une période de résonance, la période de résonance étant égale à l'inverse d'une fréquence d'oscillation du résonateur ; et
- un dispositif électronique de pilotage (20) du convertisseur d'énergie électrique (10);

**caractérisé en ce que** le dispositif de pilotage (20) est selon l'une quelconque des revendications précédentes.

16. Procédé de pilotage d'un convertisseur d'énergie électrique (10) apte à convertir une tension d'entrée ($V_{in}$) en une tension de sortie ($V_{out}$), le convertisseur (10) comportant deux bornes d'entrée pour recevoir la tension d'entrée ($V_{in}$),

deux bornes de sortie pour délivrer la tension de sortie ($V_{out}$), un résonateur (12), et plusieurs interrupteurs (14) connectés au résonateur (12), le résonateur (12) résonant suivant des cycles de résonance successifs, chaque cycle de résonance ayant une durée égale à une période de résonance, la période de résonance étant égale à l'inverse d'une fréquence d'oscillation du résonateur ;

le procédé étant mis en oeuvre par un dispositif électronique de pilotage (20) et comprenant les étapes suivantes :

- mesure (100) d'une grandeur de régulation ($G_{reg}$), la grandeur de régulation ($G_{reg}$) étant une grandeur représentative du résonateur (12) ;
- commande (120), via une unité de pilotage (58), d'une commutation de chacun des interrupteurs (14), suivant plusieurs phases successives au cours d'un cycle de résonance du résonateur (12), chaque phase résultant de la fermeture d'au moins un interrupteur (14) respectif et de l'ouverture des autres interrupteurs (14),

**caractérisé en ce qu'**il comprend en outre :

- génération (110) d'un signal triangulaire de référence (45), synchronisé régulièrement avec la grandeur de régulation ($G_{reg}$), une grandeur caractéristique ($G_{car}$) du signal triangulaire de référence (45) dépendant de la fréquence d'oscillation du résonateur (12) ;

la commande (120) d'au moins l'un des interrupteurs (14) étant effectuée à partir d'une comparaison avec le signal de référence.

FIG.1

EP 4 576 531 A1

FIG.2

FIG.3

EP 4 576 531 A1

EP 4 576 531 A1

## FIG.4

Mesure d'une grandeur de régulation du convertisseur ⌐100

Génération d'un signal triangulaire de référence, synchronisé régulièrement avec la grandeur de régulation du convertisseur ⌐110

Commande d'une commutation de chacun des interrupteurs grâce au signal triangulaire de référence ⌐120

## FIG.5

$$\underline{\text{FIG.6}}$$

FIG.7

| | Europäisches Patentamt European Patent Office Office européen des brevets | **RAPPORT DE RECHERCHE EUROPEENNE** | **Numéro de la demande**<br>EP 24 22 1235 |

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE (IPC) |
|---|---|---|---|
| X<br><br>Y | US 2015/084607 A1 (HAYAMI KAZUNORI [JP] ET AL) 26 mars 2015 (2015-03-26)<br>* le document en entier *<br>----- | 1-11,<br>13-16<br>12 | INV.<br>H02M1/00<br>H02M3/155<br>H02M3/335 |
| Y | FORRESTER JACK ET AL: "Resonant current estimation and phase-locked loop control system for inductorless step-up single piezo element-based (SUPRC) DC-DC converter",<br>IECON 2022 - 48TH ANNUAL CONFERENCE OF THE IEEE INDUSTRIAL ELECTRONICS SOCIETY, IEEE, 17 octobre 2022 (2022-10-17), pages 1-6, XP034243772,<br>DOI: 10.1109/IECON49645.2022.9969043<br>* le document en entier *<br>----- | 12 | H02M3/00<br>H02M11/00 |
| A | EP 3 627 688 A1 (COMMISSARIAT ENERGIE ATOMIQUE [FR]) 25 mars 2020 (2020-03-25)<br>* le document en entier *<br>----- | 1-16 | |

**DOMAINES TECHNIQUES RECHERCHES (IPC)**

H02M

Le présent rapport a été établi pour toutes les revendications

| Lieu de la recherche | Date d'achèvement de la recherche | Examinateur |
|---|---|---|
| Munich | 8 avril 2025 | Fraïssé, Stéphane |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
.........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 22 1235

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-04-2025

| Document brevet cité au rapport de recherche | Date de publication | Membre(s) de la famille de brevet(s) | | Date de publication |
|---|---|---|---|---|
| US 2015084607 A1 | 26-03-2015 | JP | 2015061497 A | 30-03-2015 |
| | | US | 2015084607 A1 | 26-03-2015 |
| EP 3627688 A1 | 25-03-2020 | EP | 3627688 A1 | 25-03-2020 |
| | | FR | 3086472 A1 | 27-03-2020 |
| | | US | 2020099297 A1 | 26-03-2020 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3086471 A1

- FR 3086472 A1

**Littérature non-brevet citée dans la description**

- **P. A. KYAW** ; **C. R. SULLIVAN**. Fundamental examination of multiple potential passive component technologies for future power electronics. *2015 IEEE 16th Workshop on Control and Modeling for Power Electronics (COMPEL)*
- **J. J. PIEL** ; **J. D. BOLES** ; **J. H. LANG** ; **D. J. PERREAULT**. Feedback Control for a Piezoelectric-Resonator-Based DC-DC Power Converter. *2021 IEEE 22nd Workshop on Control and Modelling of Power Electronics (COMPEL)*

- **B. POLLET** ; **G. DESPESSE** ; **F. COSTA**. A New Non-isolated Low-Power Inductorless Piezoelectric DC-DC Converter. *IEEE Transactions on Power Electronics*, vol. 34 (11)
- **M. TOUHAMI** ; **G. DESPESSE** ; **F. COSTA** ; **B. POLLET**. Implementation of Control Strategy for Step-down DC-DC Converter Based on Piezoelectric Resonator. *2020 22nd European Conférence on Power Electronics and Applications (EPE'20 ECCE Europe)*